# EUROPEAN PATENT APPLICATION

(11) **EP 4 651 387 A1**
(43) Date of publication of application: **19.11.2025**
(21) Application number: 24829875.4
(22) Date of filing: 27.02.2024
(51) Int. Cl.: H04B 1/3818, H04M 1/02, H01R 13/73, H01H 13/14

(54) **MOBILE TERMINAL**

(30) Priority: 27.06.2023 CN 202310769782
(71) Applicant: Honor Device Co., Ltd., Shenzhen, Guangdong 518040 (CN)
(72) Inventor: SUN, Jian, Shenzhen, Guangdong 518040 (CN)
(74) Representative: Gill Jennings & Every LLP
(86) International application number: PCT/CN2024/078700
(87) International publication number: WO 2025/001218

(57) **Abstract**

This application relates to a mobile terminal, including a middle frame, a card holder assembly, and a bracket, where the middle frame includes a body and a frame, and the frame is arranged around an edge of the body; the card holder assembly is fastened to the body, and the card holder assembly at least partially penetrates through the frame; the bracket is fastened to the body, and the bracket includes a bracket body and a limiting portion formed on the bracket body; and in a first direction, the card holder assembly is at least partially located between the limiting portion and the body. The bracket is directly fastened to the body of the middle frame through the bracket body, so that an opening for a screw hole on the middle frame is avoided, impact on strength of the middle frame can be lowered, structural stability of the mobile terminal is improved, and waterproof difficulty of an entire mobile terminal can be lowered to improve waterproof performance of the entire mobile terminal. In addition, the bracket is simple in structure, easy to assemble and small in volume, so that space occupied by the card holder assembly and the bracket in a first direction when the card holder assembly and the bracket are mounted on the middle frame can be reduced, and the mobile terminal is lighter and thinner in the first direction, thereby meeting a design requirement for lightness and thinness of the entire mobile terminal.

## Description

This application claims priority to Chinese Patent Application No. 202310769782.4, filed with the China National Intellectual Property Administration on June 27, 2023 and entitled "MOBILE TERMINAL", which is incorporated herein by reference in its entirety.

### TECHNICAL FIELD

This application relates to the field of electronic device technologies, and in particular, to a mobile terminal.

### BACKGROUND

As an electronic device becomes more and more powerful in function, an internal structure of the electronic device also becomes more and more complex. However, there has always been a requirement for thinness and lightness of an entire electronic device, especially for a foldable mobile terminal, for example, a foldable mobile phone. This proposes a challenge to a spatial limiting solution of a card holder assembly in a thickness direction of the entire electronic device. Usually, the card holder assembly is fastened to a middle frame through bonding by using a back adhesive, and is pressed above the card holder assembly through a bracket to perform limiting in the thickness direction. However, the bracket and the card holder assembly need to be locked through a screw and an opening for a screw hole near an axle area of the middle frame. As a result, much space is occupied in the thickness direction. In addition, waterproof performance of the axle area is destroyed, and strength of the middle frame is reduced. In some existing designs, a snap-fit groove is arranged on a side wall of a middle frame, and a snap-fit protrusion is arranged on a bracket, so that the bracket and the middle frame are snap-fitted and fastened through matching of the snap-fit protrusion and the snap-fit groove. In this way, the bracket can press a card holder assembly to the middle frame. However, the snap-fit groove with sufficient snap-fit space on the side wall of the middle frame needs to occupy much space in a thickness direction of the middle frame. As a result, a requirement for lightness and thinness of the entire electronic device cannot be met.

### SUMMARY

This application aims to provide a mobile terminal, to resolve a problem in the prior art that much space is occupied in a thickness direction of the entire mobile terminal when a card holder assembly is fastened to an upper edge of a middle frame.

An embodiment of this application provides a mobile terminal, including a middle frame, a card holder assembly, and a bracket, where the middle frame includes a body and a frame, and the frame is arranged around an edge of the body; the card holder assembly is fastened to the body, and the card holder assembly at least partially penetrates through the frame; the bracket is fastened to the body, and the bracket includes a bracket body and a limiting portion formed on the bracket body; and in a first direction, the card holder assembly is at least partially located between the limiting portion and the body.

In this application, the bracket can limit the card holder assembly in the first direction through the limiting portion, and meanwhile, the frame can provide a certain limit for the card holder assembly in the first direction, so that a fastening effect of the card holder assembly on the middle frame is improved. In addition, the bracket is directly fastened to the body of the middle frame through the bracket body, so that an opening for a screw hole on the middle frame is avoided, impact on strength of the middle frame can be lowered, structural stability of the mobile terminal is improved, and waterproof difficulty of the entire mobile terminal can be further lowered to improve waterproof performance of the entire mobile terminal. Especially in application to a foldable mobile terminal whose card holder assembly is arranged near a rotation axis area of the middle frame, an opening for a screw hole in the rotation axis area can be avoided, thereby lowering waterproof difficulty of the rotation axis area to improve the waterproof performance of the entire mobile terminal. Moreover, the bracket in the mobile terminal of the embodiment of this application is simple in structure, easy to prepare, low in cost and easy to assemble, and assembly efficiency can be improved. In addition, a volume of the bracket is small, so that interference between the bracket and the card holder assembly can be reduced, and space occupied by the card holder assembly and the bracket in the first direction when the card holder assembly and the bracket are mounted on the middle frame can be reduced, so that the mobile terminal is lighter and thinner in the first direction, thereby meeting a design requirement for lightness and thinness of the entire mobile terminal.

In a possible design, in a second direction, the bracket is arranged on one side, away from the frame, of the card holder assembly, and the limiting portion extends along an edge of the bracket body to the second direction.

In this solution, in the second direction, the bracket and the frame of the middle frame can respectively limit two ends of the card holder assembly in the first direction, so that the fastening effect of the card holder assembly on the middle frame is improved, and the two ends of the card holder assembly can be more evenly stressed in the second direction, thereby preventing the card holder assembly from edge warping, and improving structural stability of the card holder assembly fastened to the middle frame to reduce resistance during insertion or removal of a smart card, and to facilitate insertion or removal of the smart card.

In a possible design, in the second direction, a width of the limiting portion is d, and d≥0.3 mm.

In this solution, the width d of the limiting portion meets d≥0.3 mm, so that an overlapping area of the limiting portion and the card holder assembly in the first direction is larger, and impact of a fit clearance and an error on matching between the card holder assembly and the limiting portion of the bracket is reduced, thereby enabling the limiting portion of the bracket to stably limit the card holder assembly in the first direction to prevent a risk of displacement or deformation of the card holder assembly in a using process and to improve structural stability of the card holder assembly and the mobile terminal.

In a possible design, the middle frame further includes a mounting protrusion, where the mounting protrusion is arranged on the body in a protruding manner; the bracket body is provided with a groove; and the mounting protrusion is engaged with the groove.

In this solution, when the bracket is assembled with the middle frame, the groove on the bracket only needs to be aligned with the mounting protrusion on the middle frame and pressed, so that the bracket can be connected to the mounting protrusion of the middle frame through the groove on the bracket body in an engaged manner. The structure is simple, the connection is reliable, the assembly is easy, assembly efficiency of the mobile terminal can be improved and costs are reduced; and moreover, the space occupied by the bracket on the middle frame is small, so that utilization of mounting space on the middle frame is increased, to facilitate integrated design of the mobile terminal.

In a possible design, the bracket body includes a support portion, a first bending portion and a second bending portion, and in the second direction, the first bending portion and the second bending portion are respectively arranged at two ends of the support portion; the first bending portion and the second bending portion are bent along an edge of the support portion toward one side close to the body; and the first bending portion, the second bending portion, and the support portion enclose the groove.

In this solution, the structure of the bracket is more flexible, so that the bracket can adjust a size of an opening for the groove by adjusting the first bending portion and the second bending portion according to a width of a snap-fit protrusion of the middle frame in the second direction, thereby facilitating engaged connection of the bracket and the middle frame, and reducing assembly difficulty of the mobile terminal to further improve assembly efficiency; and moreover, in the structure, the groove does not need to be formed by using a device, thereby saving preparation cost, and improving preparation efficiency of the bracket.

In a possible design, the second bending portion is provided with a plurality of notches; the card holder assembly includes an elastic switch and a switch movable groove, and the elastic switch at least partially movably penetrates through the switch movable groove; and at least one of the notches is arranged corresponding to the switch movable groove.

In this solution, at least one notch is corresponding to the switch movable groove on the card holder assembly, so that interference between the bracket and the elastic switch can be avoided, so as to ensure sufficient movable space and functional reliability of the elastic switch. Moreover, arrangement of the notches can further reduce interference between the bracket and other components on the middle frame after the bracket is mounted on the middle frame, so as to improve functional reliability of the other components, and can further reduce material use of the bracket and a weight of the bracket while ensuring overall strength of the bracket, thereby further reducing costs, reducing a weight of the entire mobile terminal, and facilitating lightweight design of the mobile terminal. In addition, arrangement of a plurality of notches enables the second bending portion to easily generate certain slight deformation, so as to increase an opening degree of the groove, thereby further reducing mounting difficulty of the bracket during assembly to improve assembly efficiency.

In a possible design, the first bending portion includes a first bending edge a and a second bending edge b; and in a third direction, the first bending edge a and the second bending edge b are located on two sides of the limiting portion.

In this solution, in the third direction, connection between the first bending portion and the mounting protrusion is reliable; the bending edge a and the second bending edge b are arranged on the two sides of the limiting portion; and stress applied to the bracket in the third direction is uniform to prevent the bracket from being cocked along two sides of the third direction or to prevent the bracket from detaching from the mounting protrusion, so that the mobile terminal has higher structural stability. Moreover, an interference risk between the first bending portion and the card holder assembly can be lowered to prevent collision or scratches between the first bending portion and the card holder assembly in an assembly process, and assembly difficulty of the bracket is further reduced to improve assembly efficiency of the mobile terminal. In addition, the first bending edge a and the second bending edge b are arranged on the two sides of the limiting portion, so that the limiting portion and the support portion of the bracket body may be connected to form a plane, and the limiting portion and the support portion can jointly limit the card holder assembly in the first direction to improve a limiting effect of the bracket to the card holder assembly. Further, a width design requirement of the width d of the limiting portion in the second direction can be lowered, so as to further reduce the volume of the bracket, reduce occupied space of the bracket, and meet a requirement for lightness and thinness of the mobile terminal.

In a possible design, the bracket further includes an abutting portion, and the abutting portion is folded outward along an edge of the second bending portion; and an abutting platform is arranged on the body in a protruding manner, and the abutting portion abuts against the abutting platform.

In this solution, after the bracket is mounted on the middle frame, the abutting portion is capable of abutting against the abutting platform, so that the bracket can be prevented from rotating in a direction away from the card holder assembly, so as to avoid an excessively large gap between the limiting portion and the card holder assembly to improve a limiting effect of the limiting portion on the card holder assembly. This improves mounting stability of the bracket on the middle frame, and ensures limiting reliability of the limiting portion to the card holder assembly.

In a possible design, the abutting portion is provided with an outward folded edge, and the abutting portion abuts against the abutting platform through the folded edge.

In this solution, the folded edge can reduce roughness of an outer edge, away from one side of the second bending portion, of the abutting portion, prevent burrs and other processing residues from scratching the middle frame or injuring an assembly worker, and improve smoothness of the outer edge of the abutting portion. In addition, the structure is convenient for processing, costs are low, and meanwhile, thickness of the abutting portion can also be increased, so that deformation is unlikely to be caused when the abutting portion abuts against the abutting platform, thereby improving structural stability of the bracket.

In a possible design, the middle frame further includes a fence portion arranged on a surface of the body in a protruding manner, and the fence portion is spaced apart from the mounting protrusion in the second direction; and the abutting platform is at least partially located between the mounting protrusion and the fence portion.

In this solution, an overlapping part of projections of the fence portion, the abutting platform and the mounting protrusion in the second direction may form a U-shaped groove on the middle frame; and when the bracket is mounted on the middle frame, the abutting portion can extend along the U-shaped groove to provide guidance for mounting the bracket, so that a through-groove on the bracket body may be engaged with the mounting protrusion when the abutting portion abuts against the abutting platform to further reduce the mounting difficulty of the bracket and improve the assembly efficiency. In addition, the abutting portion and the second bending portion are located in the U-shaped groove formed by the fence portion, the abutting platform, and the mounting protrusion, so that connecting strength between the bracket and the middle frame can be further improved to prevent the bracket from detaching from the middle frame in the first direction.

In a possible design, a mounting groove configured to accommodate the card holder assembly is formed on the body, and a boss adjacent to the mounting groove is further formed on the body; and the mounting protrusion includes a first protrusion, and the first protrusion is arranged on a surface of the boss in a protruding manner.

In this solution, the mounting groove may limit, in the second direction and the third direction, the card holder assembly arranged in the mounting groove, to prevent the card holder assembly from moving in the second direction and the third direction, thereby improving connecting stability of the card holder assembly on the middle frame and structural stability of the mobile terminal. The first protrusion is arranged on the surface of the boss in the protruding manner, so that connection between the bracket and the first protrusion is facilitated, and a connecting structure of the bracket and the middle frame can be prevented from interfering with the card holder assembly.

In a possible design, the body further includes a connecting surface, and the connecting surface is formed on one side, adjacent to the mounting groove, of the boss; the mounting protrusion further includes a second protrusion, and the second protrusion is formed on the connecting surface; and the second protrusion extends in the third direction, and the second protrusion at least partially extends to a position above the mounting groove.

In this solution, the second protrusion extends on the connecting surface in the third direction, so that space occupied by the second protrusion can be reduced, utilization of the mounting space on the middle frame is increased, and a length of the bracket in the third direction can be shortened, so as to further reduce the volume and occupied space of the bracket, to meet the design requirement for lightness and thinness of the mobile terminal.

In a possible design, the mounting protrusion further includes a limiting protrusion, and the limiting protrusion is formed at one end, away from the mounting groove, of the first protrusion; and the limiting protrusion is capable of abutting against the bracket.

In this solution, when the bracket is mounted on the middle frame, the limiting protrusion may limit displacement of the bracket in the third direction, so that structural stability of the mobile terminal is improved, and relative positions of the middle frame, the card holder assembly, and the bracket are ensured to keep stable, and other interference among the middle frame, the card holder assembly, and the bracket is avoided, so as to ensure functional reliability of each part of the structure.

In a possible design, the bracket further includes an avoidance slot, and in the second direction, the avoidance slot at least penetrates through one side of the limiting portion; the card holder assembly includes a card holder, a rotatable member and a positioning column, and the rotatable member is capable of rotating around a center of the positioning column to push the card holder out of the middle frame; and the avoidance slot is arranged corresponding to the positioning column.

In this solution, the avoidance slot on the limiting portion may expose the positioning column, so that rotation of the positioning column is not interfered. In this way, the rotatable member can rotate around the positioning column, or rotate around the center of the positioning column together with the positioning column. This ensures rotation smoothness of the rotatable member, prevents the card holder from not being pushed out due to a problem such as stagnation during the rotation of the rotatable member, and ensures functional reliability of the rotatable member.

In a possible design, the mobile terminal further includes an adhesive layer, and the adhesive layer is at least partially arranged between the limiting portion and the card holder assembly.

In this solution, the adhesive layer can reduce a risk of displacement of the bracket relative to the card holder assembly, so that reliability of relative positions between the bracket and the card holder assembly is ensured, so as to prevent the bracket from interfering with a part, that needs to be moved, of the card holder assembly, and to improve functional reliability of the bracket. The adhesive layer can buffer a compressive stress of the limiting portion of the bracket on the card holder assembly, so as to avoid deformation of the card holder assembly. The adhesive layer can further prevent the metal bracket from being directly in contact with the card holder assembly to avoid electromagnetic interference, so that performance of the entire mobile terminal is improved.

In a possible design, the mobile terminal further includes a circuit board bracket and a circuit board, and the circuit board is fastened between the circuit board bracket and the body; the card holder assembly further includes a card base, and the card base includes a base body and a connector connected to the base body; and the base body is fastened to the body through bonding, and the connector is at least partially located between the circuit board and the circuit board bracket.

In this solution, the base body is fastened to the body through bonding, so that connecting stability of the card holder assembly and the middle frame can be improved; and meanwhile, the circuit board bracket can press the connector of the card base to the circuit board, so that connecting reliability of the connector and the circuit board can be ensured, so as to improve functional reliability of the mobile terminal for reading the smart card.

It should be understood that the foregoing general descriptions and the following detailed descriptions are merely examples, and cannot limit this application.

### BRIEF DESCRIPTION OF DRAWINGS

FIG. 1 is a diagram of a partial structure of an electronic device according to an embodiment in the prior art;
FIG. 2 is a diagram of a partial structure of an electronic device according to another embodiment in the prior art;
FIG. 3 is a diagram of a partial structure of an electronic device according to another embodiment in the prior art;
FIG. 4 is a diagram of a structure of a mobile terminal according to an embodiment of this application;
FIG. 5 is a diagram of a structure of a mobile terminal according to another embodiment of this application;
FIG. 6 is a schematic exploded view of a partial structure of a mobile terminal according to a specific embodiment of this application;
FIG. 7 is a diagram of an assembly structure of the mobile terminal shown in FIG. 6;
FIG. 8 is a partially enlarged view of B in FIG. 7;
FIG. 9 is a diagram of a structure of a bracket in FIG. 6;
FIG. 10 is a diagram of a partial structure of matching mounting of a middle frame and the bracket of the mobile terminal in FIG. 6;
FIG. 11 is a sectional view along a line C-C of the mobile terminal in FIG. 10;
FIG. 12 is a diagram of a partial structure of the mobile terminal in FIG. 6;
FIG. 13 is a diagram of a structure of the bracket in FIG. 9 from another angle of view;
FIG. 14 is a partially enlarged view of A in FIG. 6;
FIG. 15 is a diagram of a structure of the mobile terminal in FIG. 11 from another angle of view;
FIG. 16 is a partially enlarged view of D in FIG. 15;
FIG. 17 is a schematic exploded view of a card holder assembly in FIG. 6;
FIG. 18 is a diagram of a partial structure of the mobile terminal in FIG. 6, where a card holder is in an insertion state;
FIG. 19 is a partially enlarged view of E in FIG. 18;
FIG. 20 is a diagram of a partial structure of the mobile terminal in FIG. 6, where a card holder is in a push-out state;
FIG. 21 is a partially enlarged view of F in FIG. 20;
FIG. 22 is a diagram of a partial structure of the mobile terminal in FIG. 6;
FIG. 23 is a diagram of a structure of the middle frame in FIG. 6, where a back adhesive layer and a dispensed adhesive are provided on the middle frame; and
FIG. 24 is a partially enlarged view of G in FIG. 23.

### Reference numerals:

1'-middle frame;
   15'-rotation axis area;
   16'-screw hole;
2'-card holder assembly;
1"-middle frame;
   17"-snap-fit groove;
3"-bracket;
   31"-snap-fit protrusion;
1-middle frame;
   11-body;
      111-abutting platform;
      112-mounting groove;
      113-boss;
      114-connecting surface;
   12-frame;
      121-opening;
   13-mounting protrusion;
      131-first protrusion;
         131a-recessed portion;
      132-second protrusion;
      133-limiting protrusion;
   14-fence portion;
   15-rotation axis area;
2-card holder assembly;
   21-upper connecting portion;
   22-lower connecting portion;
   23-card holder;
   24-card base;
      241-base body;
      242-connector;
   25-rotatable member;
   26-positioning column;
   27-driving member;
   28-elastic switch;
   29-switch movable groove;
3-bracket;
   31-bracket body;
      311-groove;
      312-support portion:
      313-first bending portion;
         313a-first bending edge;
         313b-second bending edge;
      314-second bending portion;
      315-notch;
   32-limiting portion;
   33-abutting portion;
      331-folded edge;
   34-avoidance slot;
4-adhesive layer;
5-circuit board bracket;
6-circuit board;
   61-substrate;
   62-electronic component;
7a-back adhesive layer;
7b-dispensed adhesive;
8-card needle;
9a-rotation axis
9b-display screen;
Z-first direction;
Y-second direction;
X-third direction.

The accompanying drawings herein are incorporated into this specification and constitute a part of this specification, show embodiments conforming to this application, and are used together with this specification to explain a principle of this application.

### DESCRIPTION OF EMBODIMENTS

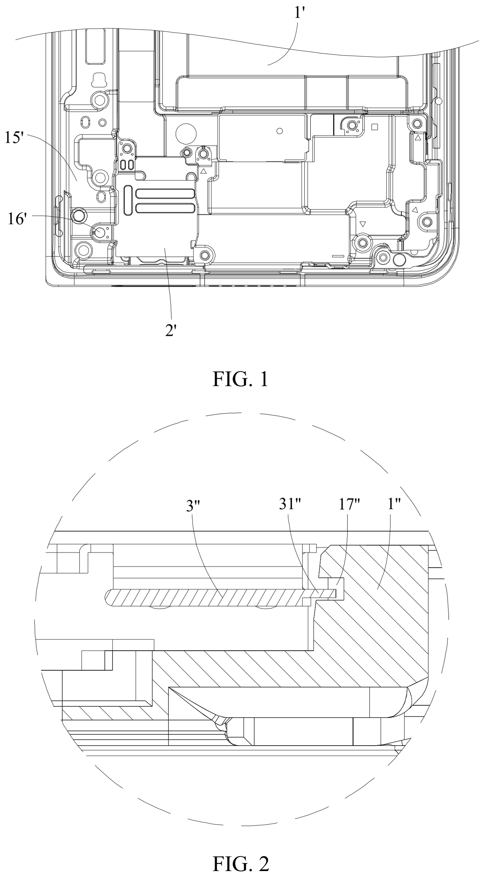

First, the related technologies are explained: An existing mobile terminal usually includes a middle frame, a card holder assembly, and a bracket. As shown in FIG. 1, usually, a card holder assembly 2' is fastened to a middle frame 1' through bonding by using a back adhesive, and is pressed above the card holder assembly 2' through an integrated bracket to perform limiting in a thickness direction. However, to improve a fastening effect of the bracket and the card holder assembly 2' on the middle frame and structural stability of the mobile terminal, the bracket and the card holder assembly 2' usually need to be locked on the middle frame 1' through a screw. In application to a foldable mobile terminal, the card holder assembly 2' is usually arranged near a rotation axis area 15' of the middle frame 1'. In this case, a screw hole 16' needs to be opened near the rotation axis area 15', so that the bracket and the card holder assembly 2' are locked on the middle frame 1' through a screw. As a result, waterproof performance of the rotation axis area 15' of the middle frame 1' is destroyed, and overall strength of the middle frame 1' is reduced. In addition, much space is occupied in the thickness direction when the screw, the bracket and the card holder assembly are connected.

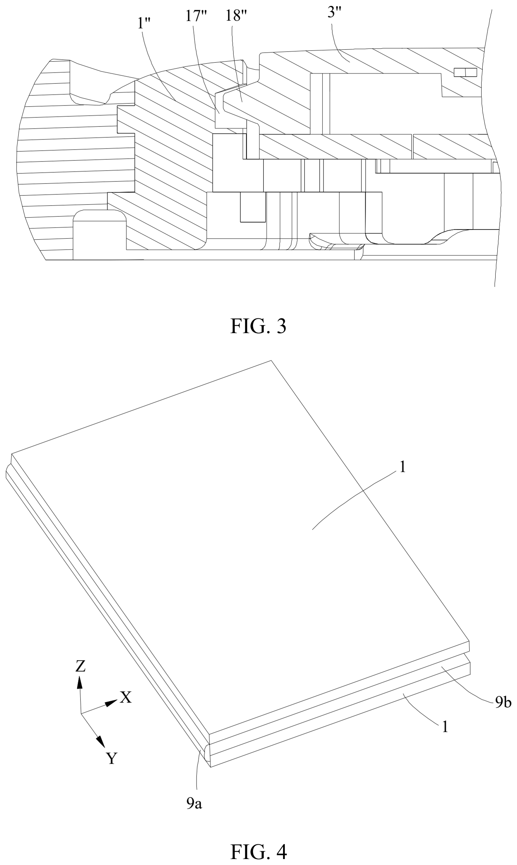

In some other designs, as shown in FIG. 2, a snap-fit groove 17" is arranged on a side wall of a middle frame 1", and a snap-fit protrusion 31" is arranged on a bracket 3", so that the bracket 3" and the middle frame 1" are snap-fitted and fastened through matching of the snap-fit protrusion 31" and the snap-fit groove 17". In this way, the bracket 3" can press a card holder assembly to the middle frame 1". However, the snap-fit groove 17" with sufficient snap-fit space on the side wall of the middle frame 1" needs to occupy much space in a thickness direction of the middle frame 1". As a result, a requirement for lightness and thinness of the entire mobile terminal cannot be met. In addition, due to a space limitation in the thickness direction, this solution cannot be implemented for some thinner mobile terminals. Moreover, to avoid electromagnetic interference, the bracket 3" supported by a metal material usually cannot be directly in contact with the card holder assembly, and a structure, for example, an insulating adhesive layer, needs to be additionally arranged between the bracket 3"and the card holder assembly to further increase thickness of the mobile terminal. Alternatively, as shown in FIG. 3, a bracket 3" is made of plastic. However, to ensure strength of the bracket 3", the bracket 3" is thicker than a metal bracket. As a result, much space is also occupied in a thickness direction of the entire mobile terminal when the bracket 3" and a middle frame 1" are snap-fitted through matching.

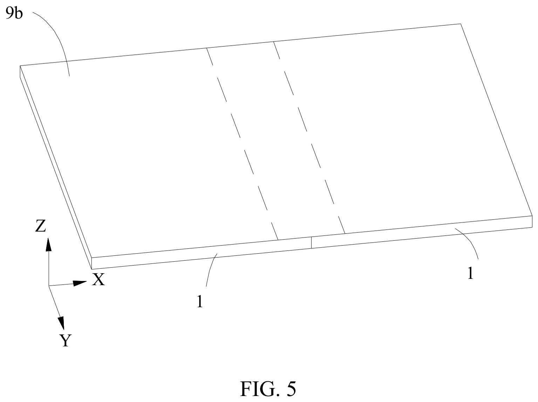

To resolve the foregoing technical problems, an embodiment of this application provides a mobile terminal. The mobile terminal includes an electronic device, for example, a mobile phone, a tablet computer, a personal digital assistant (personal digital assistant, PDA), a notebook computer, a vehicle-mounted computer, a foldable display device, a foldable display screen, or a wearable device. The embodiment of this application does not impose special restrictions on a specific form of the foregoing mobile terminal. For ease of description, the following provides description by using an example in which the mobile terminal is a foldable mobile phone as shown in FIG. 4 and FIG. 5. The mobile terminal of this application is described below with a specific embodiment.

As shown in FIG. 4 and FIG. 5, FIG. 4 is a diagram of a structure of a mobile terminal according to an embodiment of this application, where the mobile terminal is in a folded state, and FIG. 5 is a diagram of a structure of a mobile terminal according to another embodiment of this application, where the mobile terminal is in an unfolded state. The mobile terminal includes a middle frame 1, a rotation axis 9a, and a display screen 9b. The mobile terminal in this embodiment includes two middle frames 1 that can be rotated relatively. The rotation axis 9a is rotatably connected between the two middle frames 1. The display screen 9b is mounted on the middle frames 1. When the two middle frames 1 rotate relative to the rotation axis 9a to be close to each other, the display screen 9b can be driven to fold, so that the mobile terminal is in the folded state shown in FIG. 4. In this way, an overall size of the mobile terminal is reduced, to facilitate user carrying. When the two middle frames 1 rotate relative to the rotation axis 9a to be separated from each other, the display screen 9b can be driven to unfold, so that the mobile terminal is in the unfolded state shown in FIG. 5. In this way, the display screen 9b has a larger display area, to facilitate user operation and viewing. In this embodiment, the display screen 9b is a flexible display, for example, an organic light-emitting diode (organic light-emitting diode, OLED) display screen, an active-matrix organic light-emitting diode (active-matrix organic light-emitting diode, AMOLED) display screen, a mini organic light-emitting diode (mini organic light-emitting diode) display screen, a micro organic light-emitting diode (micro organic light-emitting diode) display screen, a micro organic light-emitting diode (micro organic light-emitting diode) display screen, or a quantum dot light-emitting diode (quantum dot light-emitting diode, QLED) display screen.

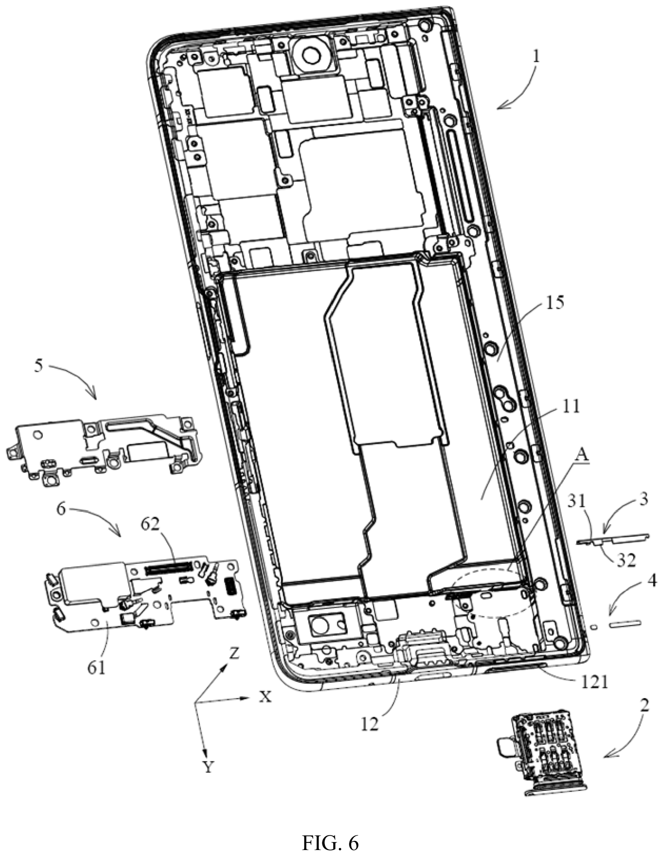

Refer to FIG. 6. FIG. 6 is a schematic exploded view of a partial structure of the mobile terminal according to a specific embodiment of this application. Further, a middle frame 1 shown in FIG. 6 may be only a middle frame 1 located on one side of the rotation axis 9a in the mobile terminal shown in FIG. 5.

As shown in FIG. 6, the mobile terminal may include a middle frame 1, a card holder assembly 2, a bracket 3, and the like, where the middle frame 1 includes a body 11 and a frame 12, and the frame 12 is arranged around an edge of the body 11; the card holder assembly 2 is fastened to the body 11, and the card holder assembly 2 at least partially penetrates through the frame 12; and the bracket 3 is fastened to the body 11, and the bracket 3 includes a bracket body 31 and a limiting portion 32 formed on the bracket body 31. An opening 121 may be arranged on the frame 12, and the card holder assembly 2 at least partially penetrates through the frame 12 through the opening 121, to facilitate insertion and removal of smart cards such as a SIM card, an SD card, and a TF card.

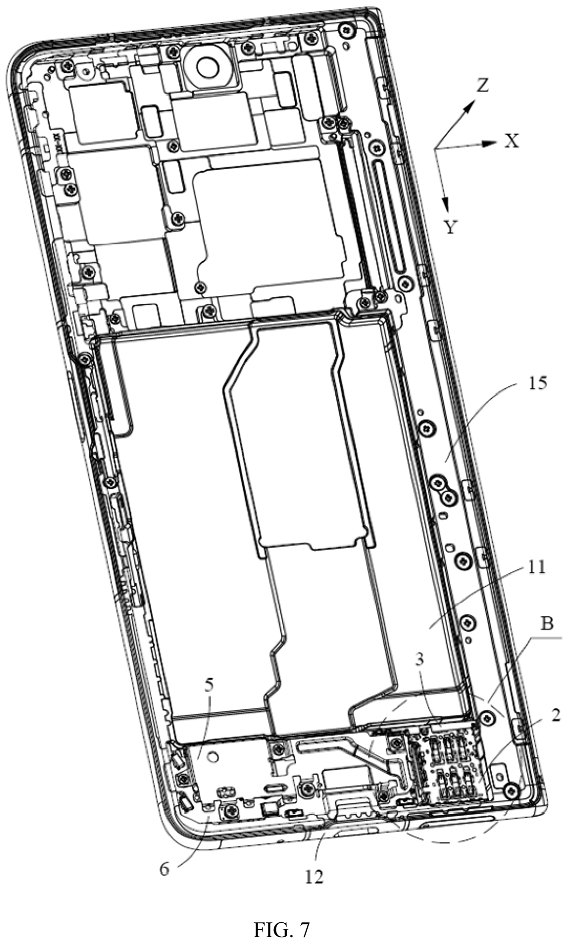

Refer to FIG. 7. FIG. 7 is a diagram of an assembly structure of the mobile terminal shown in FIG. 6. As shown in FIG. 7, in a first direction Z, the card holder assembly 2 is at least partially located between the limiting portion 32 and the body 11.

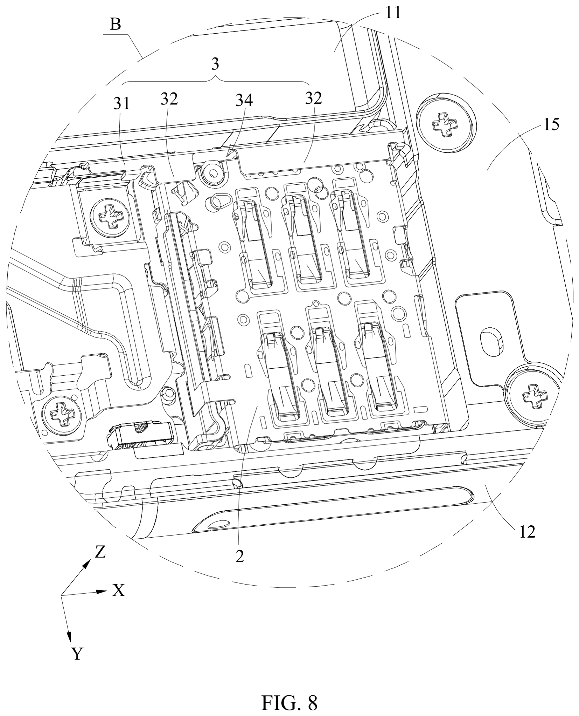

Refer to FIG. 8. FIG. 8 is a partially enlarged view of B in FIG. 7. As shown in FIG. 8, the bracket 3 can limit the card holder assembly 2 in the first direction Z through the limiting portion 32, and meanwhile, the frame 12 can provide a certain limit for the card holder assembly 2 in the first direction Z, so that a fastening effect of the card holder assembly 2 on the middle frame 1 is improved. In addition, the bracket 3 is directly fastened to the body 11 of the middle frame 1 through the bracket body 31, so that an opening for a screw hole on the middle frame 1 is avoided, impact on strength of the middle frame can be lowered, structural stability of the mobile terminal is improved, and waterproof difficulty of the entire mobile terminal can be further lowered to improve waterproof performance of the entire mobile terminal. Especially in application to a foldable mobile terminal whose card holder assembly 2 is arranged near a rotation axis area 15 of the middle frame 1, an opening for a screw hole in the rotation axis area 15 can be avoided, thereby lowering waterproof difficulty of the rotation axis area to improve the waterproof performance of the entire mobile terminal. Moreover, the bracket 3 in the mobile terminal of the embodiment of this application is simple in structure, easy to prepare, low in cost and easy to assemble, and assembly efficiency can be improved. In addition, a volume of the bracket 3 is small, so that interference between the bracket 3 and the card holder assembly 2 can be reduced, and space occupied by the card holder assembly 2 and the bracket 3 in the first direction Z when the card holder assembly 2 and the bracket 3 are mounted on the middle frame 1 can be reduced, so that the mobile terminal is lighter and thinner in the first direction Z, thereby meeting a design requirement for lightness and thinness of the entire mobile terminal.

In a specific embodiment, as shown in FIG. 8, in a second direction Y, the bracket 3 is arranged on one side, away from the frame 12, of the card holder assembly 2. Further, the limiting portion 32 of the bracket 3 extends along an edge of the bracket body 31 to the second direction Y.

In this embodiment, as shown in FIG. 8, in the second direction Y, the bracket 3 and the frame 12 of the middle frame 1 can respectively limit two ends of the card holder assembly 2 in the first direction Z, so that the fastening effect of the card holder assembly 2 on the middle frame 1 is improved, and the two ends of the card holder assembly 2 can be more evenly stressed in the second direction Y, thereby preventing the card holder assembly from edge warping, and improving structural stability of the card holder assembly 2 fastened to the middle frame 1 to reduce resistance during insertion or removal of a smart card, and to facilitate insertion or removal of the smart card.

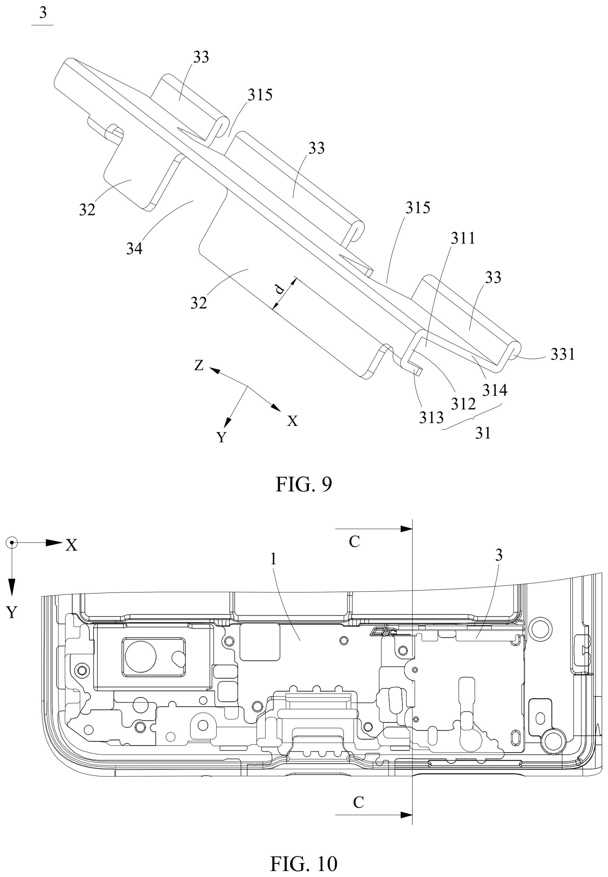

Further, refer to FIG. 9. FIG. 9 is a diagram of a structure of the bracket 3 in FIG. 6. As shown in FIG. 9, in the second direction Y, a width of the limiting portion 32 is d, and d≥0.3 mm. For example, d may be 0.3 mm, 0.35 mm, 0.4 mm, 0.45 mm, or 0.5 mm. A specific numerical value of d may be specifically set according to specific matching of the bracket 3 and the card holder assembly 2. This is not limited herein.

If the width d of the limiting portion 32 is excessively small, for example, d<0.3 mm, the limiting portion 32 is excessively short. In this case, an overlapping area of the limiting portion 32 and the card holder assembly 2 in the first direction Z is smaller, resulting in a poor limiting effect on the card holder assembly 2 in the first direction Z and low structural stability of the mobile terminal.

In this embodiment, as shown in FIG. 9, the width d of the limiting portion 32 meets d≥0.3 mm, so that the overlapping area of the limiting portion 32 and the card holder assembly 2 in the first direction Z is larger, and impact of a fit clearance and an error on matching between the card holder assembly 2 and the limiting portion 32 of the bracket 3 is reduced, thereby enabling the limiting portion 32 of the bracket 3 to stably limit the card holder assembly 2 in the first direction Z to prevent a risk of displacement or deformation of the card holder assembly 2 in a using process and to improve structural stability of the card holder assembly 2 and the mobile terminal.

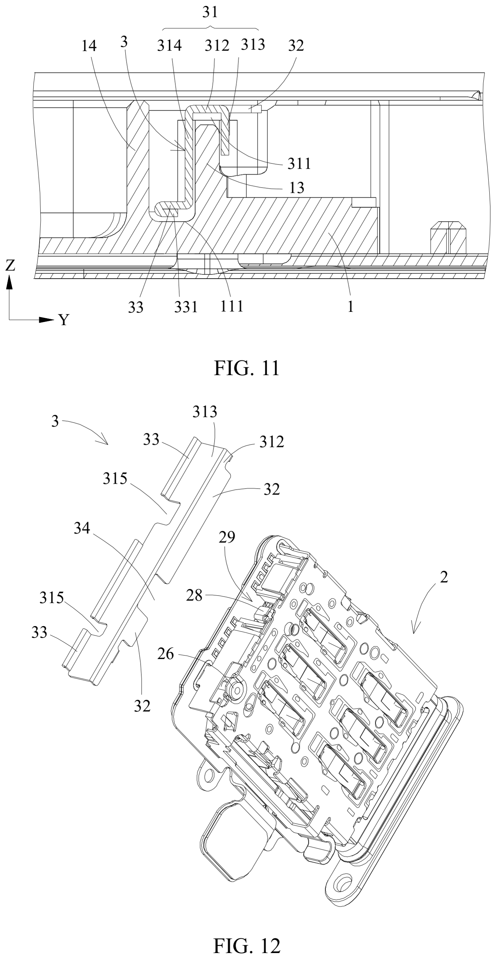

Refer to FIG. 10 and FIG. 11. FIG. 10 is a diagram of a partial structure of matching mounting of the middle frame 1 and the bracket 3 of the mobile terminal in FIG. 6. FIG. 11 is a sectional view along a line C-C of the mobile terminal in FIG. 10. As shown in FIG. 11, the middle frame 1 further includes a mounting protrusion 13, where the mounting protrusion 13 is arranged on the body 11 in a protruding manner; the bracket body 31 is provided with a groove 311; and the groove 311 is engaged with the mounting protrusion 13.

In this embodiment, as shown in FIG. 11, when the bracket 3 is assembled with the middle frame 1, the groove 311 on the bracket 3 only needs to be aligned with the mounting protrusion 13 on the middle frame 1 and pressed, so that the bracket 3 can be connected to the mounting protrusion 13 of the middle frame 1 through the groove 311 on the bracket body 31 in an engaged manner. The structure is simple, the connection is reliable, the assembly is easy, assembly efficiency of the mobile terminal can be improved and costs are reduced; and moreover, the space occupied by the bracket 3 on the middle frame 1 is small, so that utilization of mounting space on the middle frame 1 is increased, to facilitate integrated design of the mobile terminal

Certainly, the bracket 3 may alternatively be directly connected to the middle frame 1 through snap-fit, screw connection, or the like. This is not limited herein.

Further, as shown in FIG. 11, the bracket body 31 includes a support portion 312, a first bending portion 313, and a second bending portion 314, and in the second direction Y, the first bending portion 313 and the second bending portion 314 are respectively arranged at two ends of the support portion 312; the first bending portion 313 and the second bending portion 314 are bent along an edge of the support portion 312 to one side close to the body 11; and the first bending portion 313, the second bending portion 314, and the support portion 312 enclose the groove 311.

In this embodiment, as shown in FIG. 11, the structure of the bracket 3 is more flexible, so that the bracket 3 can adjust a size of an opening for the groove 311 by adjusting the first bending portion 313 and the second bending portion 314 according to a width of a snap-fit protrusion 13 of the middle frame 1 in the second direction 3, thereby facilitating engaged connection of the bracket 3 and the middle frame 1, and reducing assembly difficulty of the mobile terminal to further improve assembly efficiency; and moreover, in the structure, the groove 311 does not need to be formed through groove preparation by using a dedicated grooving device, thereby saving preparation cost, and improving preparation efficiency of the bracket 3.

In another specific embodiment, the groove 311 can be formed in the bracket body 31 of the bracket 3 by using a device, so that a step of relatively bending the first bending portion 313 and the second bending portion 314 can be avoided to simplify a preparation process. Certainly, the groove 311 may alternatively be formed in another manner. This is not limited herein.

Refer to FIG. 12. FIG. 12 is a diagram of a partial structure of the mobile terminal in FIG. 6.

In a specific embodiment, as shown in FIG. 12, the second bending portion 314 is provided with a plurality of notches 315; the card holder assembly 2 includes an elastic switch 28 and a switch movable groove 29, and the elastic switch 28 at least partially movably penetrates through the switch movable groove 29; and at least one of the notches 315 is arranged corresponding to the switch movable groove 29.

The elastic switch 28 can be in contact with a card holder 23 when the card holder 23 of the card holder assembly 2 is inserted, so that a detection element in the mobile terminal is conductive to detect whether the card holder 23 is inserted.

In this embodiment, as shown in FIG. 12, at least one notch 315 is corresponding to the switch movable groove 29 on the card holder assembly 2, so that interference between the bracket 3 and the elastic switch 28 can be avoided, so as to ensure sufficient movable space and functional reliability of the elastic switch 28. Moreover, arrangement of the notches 315 can further reduce interference between the bracket 3 and other components on the middle frame 1 after the bracket 3 is mounted on the middle frame 1, so as to improve functional reliability of the other components, and can further reduce material use of the bracket 3 and a weight of the bracket 3 while ensuring overall strength of the bracket 3, thereby further reducing costs, reducing a weight of the entire mobile terminal, and facilitating lightweight design of the mobile terminal. In addition, arrangement of a plurality of notches 315 enables the second bending portion 314 to easily generate certain slight deformation, so as to increase an opening degree of the groove 311, thereby further reducing mounting difficulty of the bracket 3 during assembly to improve assembly efficiency.

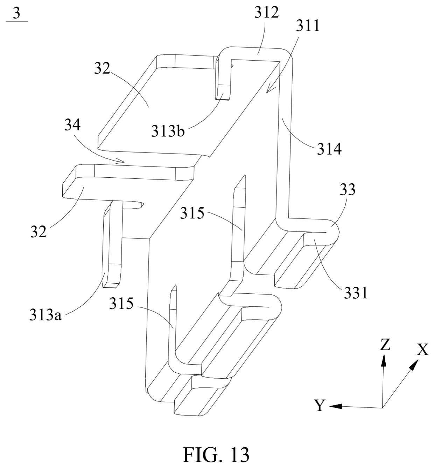

Refer to FIG. 13. FIG. 13 is a diagram of a structure of the bracket in FIG. 9 from another angle of view.

In a specific embodiment, as shown in FIG. 13, the first bending portion 313 includes a first bending edge 313a and a second bending edge 313b; and in a third direction X, the first bending edge 313a and the second bending edge 313b are located on two sides of the limiting portion 32.

In this embodiment, as shown in FIG. 8, FIG. 11, FIG. 12, and FIG. 13, in the third direction X, connection between the first bending portion 313 and the mounting protrusion 13 is reliable; the bending edge 313a and the second bending edge 313b are arranged on two sides of the limiting portion 32; and the stress applied to the bracket 3 in the third direction X is uniform to prevent the bracket 3 from being cocked along two sides of the third direction X or to prevent the bracket 3 from detaching from the mounting protrusion 13, so that the mobile terminal has higher structural stability. Moreover, an interference risk between the first bending portion 313 and the card holder assembly 2 can be lowered to prevent collision or scratches between the first bending portion 313 and the card holder assembly 2 in an assembly process, and assembly difficulty of the bracket 3 is further reduced to improve an assembly efficiency of the mobile terminal. In addition, the first bending edge 313a and the second bending edge 313b are arranged on two sides of the limiting portion 32, so that the limiting portion 32 and the support portion 312 of the bracket body 31 may be connected to form a plane, and the limiting portion 32 and the support portion 312 can jointly limit the card holder assembly 2 in the first direction Z to improve a limiting effect of the bracket 3 to the card holder assembly 2. Further, a width design requirement of the width d of the limiting portion 32 in the second direction Y can be reduced, so as to further reduce the volume of the bracket 3, reduce occupied space of the bracket 3, and meet a requirement for lightness and thinness of the mobile terminal.

In another specific embodiment, the first bending portion 313 may alternatively be an entire bending edge extending in the third direction X, so as to further improve connecting strength of the bracket 3 and the mounting protrusion 13. Certainly, according to the design requirement of the mobile terminal, the first bending portion 313 may alternatively be designed in another manner, for example, a plurality of first bending portions are designed. This is not limited herein.

In a specific embodiment, as shown in FIG. 11 and FIG. 13, the bracket 3 further includes an abutting portion 33, and the abutting portion 33 is folded outward along an edge of the second bending portion 314; and an abutting platform 111 is arranged on the body 11 in a protruding manner, and the abutting portion 33 abuts against the abutting platform 111.

In this embodiment, as shown in FIG. 11 and FIG. 13, after the bracket 3 is mounted on the middle frame 1, the abutting portion 33 is capable of abutting against the abutting platform 111, so that the bracket 3 can be prevented from rotating in a direction away from the card holder assembly 2, so as to avoid an excessively large gap between the limiting portion 32 and the card holder assembly 2 to improve a limiting effect of the limiting portion 32 on the card holder assembly 2. This improves mounting stability of the bracket 3 on the middle frame 1, and ensures limiting reliability of the limiting portion 32 to the card holder assembly 2.

Further, as shown in FIG. 11 and FIG. 13, the abutting portion 33 is provided with an outward folded edge 331, and the abutting portion 33 abuts against the abutting platform 111 through the folded edge 331.

In this embodiment, as shown in FIG. 11 and FIG. 13, the folded edge 331 can reduce roughness of an outer edge, away from one side of the second bending portion 314, of the abutting portion 33, prevent burrs and other processing residues from scratching the middle frame 1 or injuring an assembly worker, and improve smoothness of the outer edge of the abutting portion 33. In addition, the structure is convenient for processing, costs are low, and meanwhile, thickness of the abutting portion 33 can also be increased, so that deformation is unlikely to be caused when the abutting portion 33 abuts against the abutting platform 111, thereby improving structural stability of the bracket 3.

In another specific embodiment, the bracket 3 may alternatively not be provided with the abutting portion 33, so that the second bending portion 314 directly abuts against the abutting platform 111, so as to further reduce the volume and occupied space of the bracket 3.

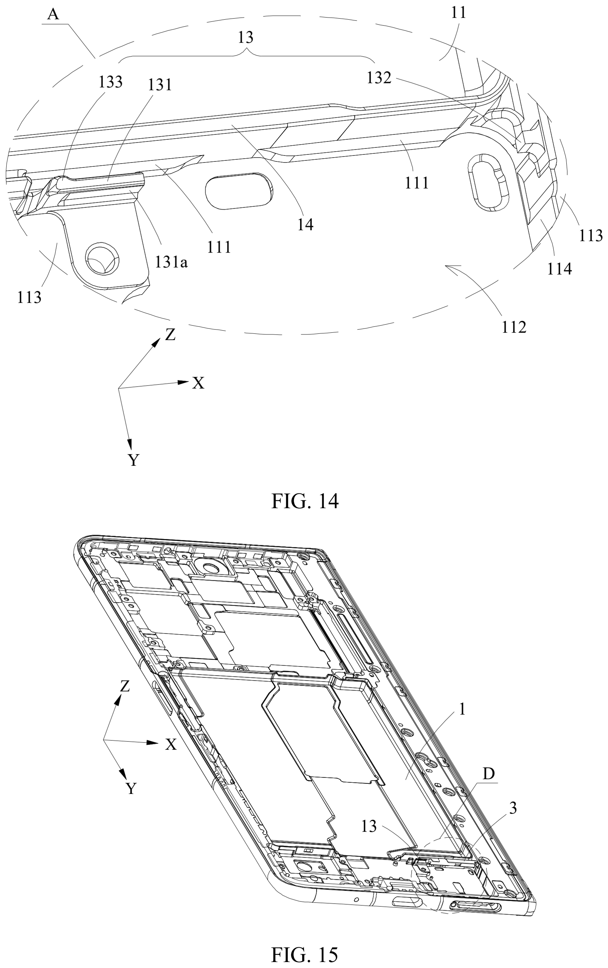

Refer to FIG. 14. FIG. 14 is a partially enlarged view of A in FIG. 6.

In a specific embodiment, as shown in FIG. 14, the middle frame 1 further includes a fence portion 14 arranged on a surface of the body 11 in a protruding manner, and the fence portion 14 is spaced apart from the mounting protrusion 13 in the second direction Y; and the abutting platform 111 is at least partially located between the mounting protrusion 13 and the fence portion 14.

In this embodiment, as shown in FIG. 11 and FIG. 14, an overlapping part of projections of the fence portion 14, the abutting platform 111, and the mounting protrusion 13 in the second direction Y may form a U-shaped groove on the middle frame 1; and when the bracket 3 is mounted on the middle frame 1, the abutting portion 33 can extend along the U-shaped groove to provide guidance for mounting the bracket 3, so that a through-groove 311 on the bracket body 31 may be engaged with the mounting protrusion 13 when the abutting portion 33 abuts against the abutting platform 111 to further reduce the mounting difficulty of the bracket 3 and improve the assembly efficiency. In addition, the abutting portion 33 and the second bending portion 314 are located in the U-shaped groove formed by the fence portion 14, the abutting platform 111, and the mounting protrusion 13, so that connecting strength between the bracket 3 and the middle frame 1 can be further improved to prevent the bracket 3 from detaching from the middle frame 1 in the first direction Z.

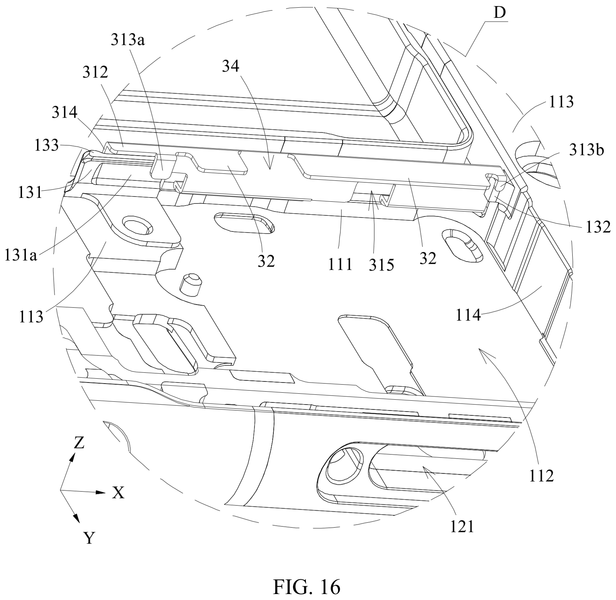

Refer to FIG. 15 and FIG. 16. FIG. 15 is a diagram of a structure of the mobile terminal in FIG. 11 from another angle of view. FIG. 16 is a partially enlarged view of D in FIG. 15.

In a specific embodiment, as shown in FIG. 14 and FIG. 16, a mounting groove 112 configured to accommodate the card holder assembly 2 is formed on the body 11, and a boss 113 adjacent to the mounting groove 112 is further formed on the body 11; and the mounting protrusion 13 includes a first protrusion 131, and the first protrusion 131 is arranged on a surface of the boss 113 in a protruding manner.

In this embodiment, as shown in FIG. 14, the mounting groove 112 may limit, in the second direction Y and the third direction X, the card holder assembly 2 arranged in the mounting groove 112, to prevent the card holder assembly 2 from moving in the second direction Y and the third direction X, thereby improving connecting stability of the card holder assembly 2 on the middle frame 1 and structural stability of the mobile terminal. The first protrusion 131 is arranged on the surface of the boss 113 in the protruding manner, so that connection between the bracket 3 and the first protrusion 131 is facilitated, and a connecting structure of the bracket 3 and the middle frame 1 can be prevented from interfering with the card holder assembly 2.

In a specific embodiment, as shown in FIG. 14 and FIG. 16, the body 11 further includes a connecting surface 114, and the connecting surface 114 is formed on one side, adjacent to the mounting groove 112, of the boss 113; the mounting protrusion 13 further includes a second protrusion 132, and the second protrusion 132 is formed on the connecting surface 114; and the second protrusion 132 extends in the third direction X, and the second protrusion 132 at least partially extends to a position above the mounting groove 112.

In this embodiment, as shown in FIG. 14 and FIG. 16, the second protrusion 132 extends on the connecting surface 114 in the third direction X, so that space occupied by the second protrusion 132 can be reduced, utilization of the mounting space on the middle frame 1 is increased, and a length of the bracket 3 in the third direction X can be shortened, so as to further reduce the volume and occupied space of the bracket 3, to meet the design requirement for lightness and thinness of the mobile terminal.

Because the second protrusion 132 is formed on the connecting surface 114, when the bracket 3 is engaged with the second protrusion 132, the connecting surface 114 can also limit the bracket 3 in the third direction X, thereby preventing the bracket 3 from moving in the third direction, and improving connecting stability of the bracket 3 on the middle frame 1. In addition, there is no need to additionally arrange a corresponding limiting component, so that structural complexity of the mobile terminal is further lowered.

It should be noted that the mounting protrusion 13 may include only the first protrusion 131, or may include only the second protrusion 132. Certainly, the mounting protrusion 13 may alternatively include both the first protrusion 131 and the second protrusion 132. This is not limited herein.

In the specific embodiments shown in FIG. 14 and FIG. 16, the mounting protrusion 13 includes both the first protrusion 131 and the second protrusion 132 that are respectively formed on two sides of the boss 113 in the third direction X on the mounting groove 112. When the bracket 3 is engaged with the middle frame 1, the groove 311 formed by the first bending edge 313a, the support portion 312, and the second bending portion 314 is engaged with the first protrusion 131, and the groove 311 formed by the second bending edge 313b, the support portion 312, and the second bending portion 314 is engaged with the second protrusion 132, so that the bracket 3 can be stably embedded on the middle frame 1 to improve connecting stability of the bracket 3 and the middle frame 1.

Further, as shown in FIG. 14 and FIG. 16, the mounting protrusion 13 further includes a limiting protrusion 133, and the limiting protrusion 133 is formed at one end, away from the mounting groove 112, of the first protrusion 131; and the limiting protrusion 133 is capable of abutting against the bracket 3.

In this embodiment, as shown in FIG. 14 and FIG. 16, when the bracket 3 is mounted on the middle frame 1, the limiting protrusion 133 may limit displacement of the bracket 3 in the third direction X, so that structural stability of the mobile terminal is improved, and relative positions of the middle frame 1, the card holder assembly 2, and the bracket 3 are ensured to keep stable, and other interference among the middle frame 1, the card holder assembly 2, and the bracket 3 is avoided, so as to ensure functional reliability of each part of the structure.

Further, as shown in FIG. 16, a recessed portion 131a may further be provided on the mounting protrusion 13, and the recessed portion 131a is formed on two sides of the mounting protrusion 13 in the second direction Y, so that the recessed portion 131a can be snap-fitted to the groove 311 on the bracket 3 through matching, and can play a certain limiting role in displacement of the bracket 3 in the first direction Z and the third direction X, to further improve connecting stability of the bracket 3 and the middle frame 1.

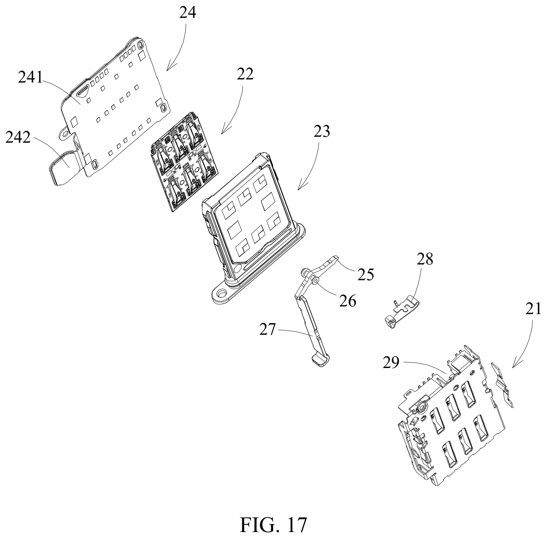

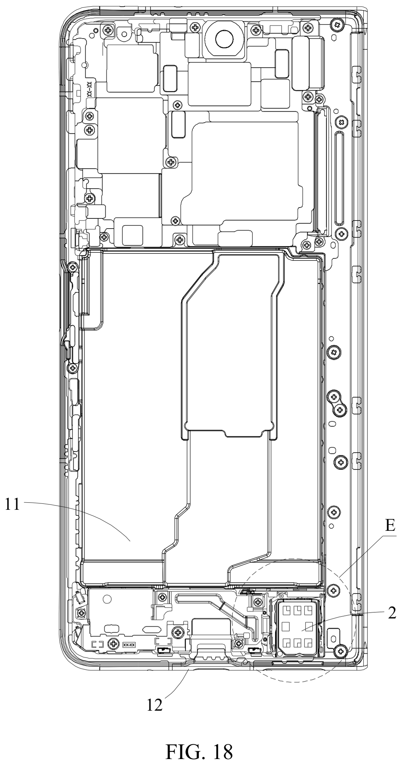

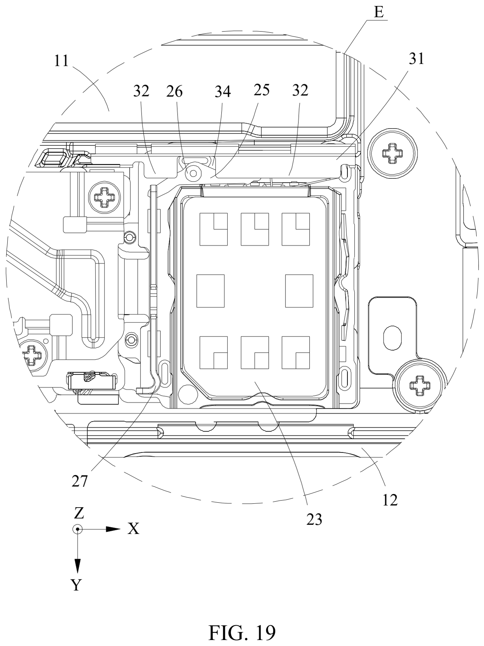

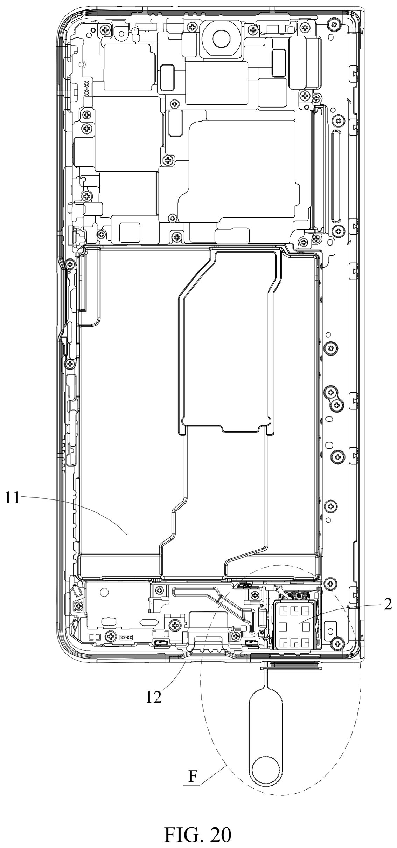

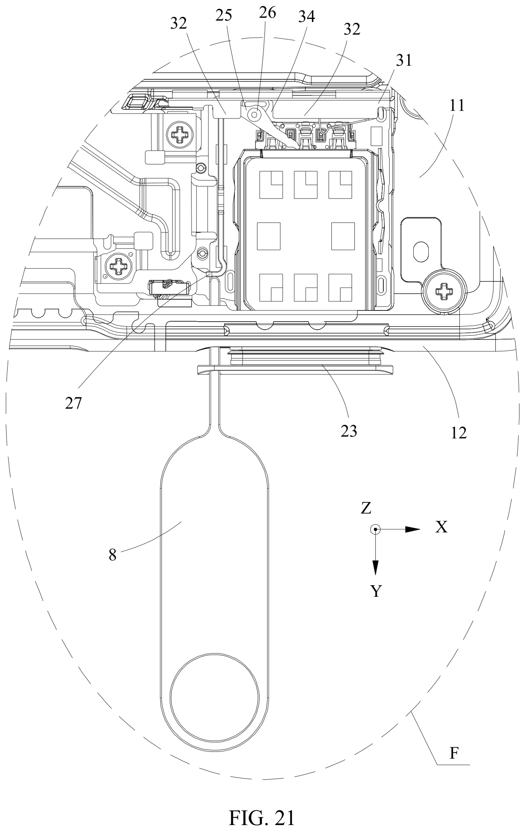

Refer to FIG. 17 to FIG. 21. FIG. 17 is a schematic exploded view of the card holder assembly 2 in FIG. 6. FIG. 18 is a diagram of a partial structure of the mobile terminal in FIG. 6, where a card holder 23 is in an insertion state. FIG. 19 is a partially enlarged view of E in FIG. 18. FIG. 20 is a diagram of a partial structure of the mobile terminal in FIG. 6, where a card holder 23 is in a push-out state. FIG. 21 is a partially enlarged view of F in FIG. 20.

As shown in FIG. 17, FIG. 19, and FIG. 21, the card holder assembly 2 includes the card holder 23, a rotatable member 25, and a positioning column 26, and the rotatable member 25 is capable of rotating around a center of the positioning column 26 to push the card holder 23 out of the middle frame 1. The bracket 3 further includes an avoidance slot 34, and in the second direction Y, the avoidance slot 34 at least penetrates through one side of the limiting portion 32; and the avoidance slot 34 is arranged corresponding to the positioning column 26.

As shown in FIG. 17, the card holder assembly 2 includes an upper connecting portion 21 and a lower connecting portion 22 spaced apart from each other, the card holder 23, the rotatable member 25, and the positioning column 26, where the card holder 23 may carry a smart card to penetrate through a gap between the upper connecting portion 21 and the lower connecting portion 22. The positioning column 26 may penetrate through the upper connecting portion 21 and the lower connecting portion 22 to be fastened, so that the rotatable member 25 is located between the upper connecting portion 21 and the lower connecting portion 22. As shown in FIG. 19, when the card holder 23 is inserted between the upper connecting portion 21 and the lower connecting portion 22, the rotatable member 25 can be pushed to rotate around the center of the positioning column 26, so that sufficient amounting space is provided for the card holder 23 to enable the card holder 23 to be in the insertion state. As shown in FIG. 21, when the card holder 23 needs to be removed, the rotatable member 25 may be driven to rotate around the center of the positioning column 26, so that the rotatable member 25 pushes the card holder 23 to stretch out of the position between the upper connecting portion 21 and the lower connecting portion 22, and the card holder 23 is in the push-out state. In this way, the user can remove the card holder 23 for a next operation.

As shown in FIG. 19 and FIG. 21, the bracket 3 further includes the avoidance slot 34, and in the second direction Y, the avoidance slot 34 at least penetrates through one side of the limiting portion 32; and the avoidance slot 34 is arranged corresponding to the positioning column 26.

In this embodiment, as shown in FIG. 19 and FIG. 21, the avoidance slot 34 on the limiting portion 32 may expose the positioning column 26, so that rotation of the positioning column 26 is not interfered. In this way, the rotatable member 25 can rotate around the positioning column 26, or rotate around the center of the positioning column 26 together with the positioning column 26. This ensures rotation smoothness of the rotatable member 25, prevents the card holder 23 from not being pushed out due to a problem such as stagnation during rotation of the rotatable member 25, and ensures functional reliability of the rotatable member 25.

As shown in FIG. 17, FIG. 19 and FIG. 21, the card holder assembly 2 may further include a driving member 27 connected to the rotatable member 25. When the card holder 23 needs to be removed, the user can conveniently push the driving member 27 through a card needle 8, and the driving member 27 is enabled to drive the rotatable member 25 to rotate, so that the rotatable member 25 pushes the card holder 23 to stretch out of the opening 121 on the frame 12, so as to remove the card holder 23.

In a specific embodiment, the bracket 3 may have an integrally formed structure to improve structural stability and overall strength of the bracket 3, facilitate mass production of the bracket 3, and save costs.

Further, the bracket 3 may be made of a metal material, so that thickness of the bracket 3 is thinned while higher strength of the bracket 3 is ensured, space occupied by the bracket 3 in the first direction Z is further reduced, so as to meet the design requirement for lightness and thinness of the mobile terminal.

Further, as shown in FIG. 6, the mobile terminal further includes an adhesive layer 4, and the adhesive layer 4 is at least partially arranged between the limiting portion 32 and the card holder assembly 2.

In this embodiment, as shown in FIG. 6, the adhesive layer 4 can reduce a risk of displacement of the bracket 3 relative to the card holder assembly 2, so that reliability of relative positions between the bracket 3 and the card holder assembly 2 is ensured, so as to prevent the bracket 3 from interfering with a part, that needs to be moved, of the card holder assembly 2, and to improve functional reliability of the bracket 3. The adhesive layer 4 can buffer a compressive stress of the limiting portion 32 of the bracket 3 on the card holder assembly 2, so as to avoid deformation of the card holder assembly 2. The adhesive layer 4 can further prevent the metal bracket 3 from being directly in contact with the card holder assembly 2 to avoid electromagnetic interference, so that performance of the entire mobile terminal is improved.

The adhesive layer 4 may be arranged corresponding to the limiting portion 32. This is not limited herein.

In another embodiment, the bracket 3 may alternatively be made of a polymer material, for example, plastic, so as to avoid electromagnetic interference caused by contact between the bracket 3 and the card holder assembly 2. This is not limited herein.

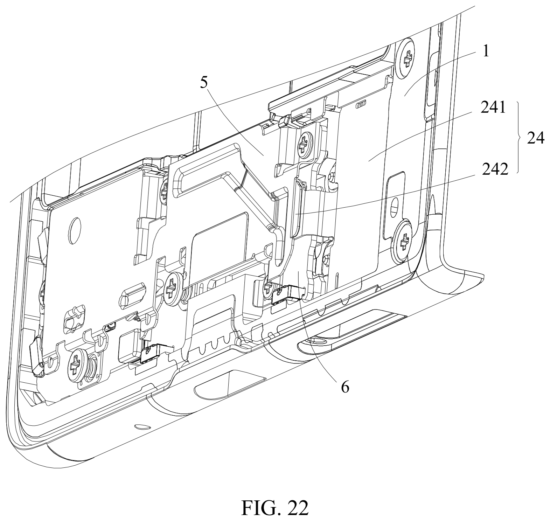

Refer to FIG. 22. FIG. 22 is a diagram of a partial structure of the mobile terminal of the electronic device in FIG. 6.

In a specific embodiment, as shown in FIG. 22, the mobile terminal further includes a circuit board bracket 5 and a circuit board 6, and the circuit board 6 is fastened between the circuit board bracket 5 and the body 11; the card holder assembly 2 further includes a card base 24, and the card base 24 includes a base body 241 and a connector 242 connected to the base body 241; and the base body 241 is fastened to the body 11 through bonding, and the connector 242 is at least partially located between the circuit board 6 and the circuit board bracket 5. Refer to FIG. 17. The upper connecting portion 21 and the lower connecting portion 22 of the card holder assembly 2 are connected to the base body 241 of the card base 24. When the card holder 23 carries a smart card in the insertion state shown in FIG. 19, electrical connection between the card holder 23 and the circuit board can be implemented through the connector 242 of the card base 24, so that the mobile terminal can read content in the smart card. The connector 242 may be a flexible printed circuit board (Flexible Printed Circuit, FPC) or another connector. This is not limited herein.

In this embodiment, as shown in FIG. 22, the base body 241 is fastened to the body 11 through bonding, so that connecting stability of the card holder assembly 2 and the middle frame 1 can be improved; and meanwhile, the circuit board bracket 5 can press the connector 242 of the card base 24 to the circuit board 6, so that connecting reliability of the connector 242 and the circuit board 6 can be ensured, so as to improve functional reliability of the mobile terminal for reading the smart card.

As shown in FIG. 4, the circuit board 6 includes a substrate 61 and an electronic device 62 arranged on the substrate 61, and the circuit board bracket 5 may be at least partially shielded above the electronic device 62 and is connected to the substrate 61 through a screw to protect the electronic device 62.

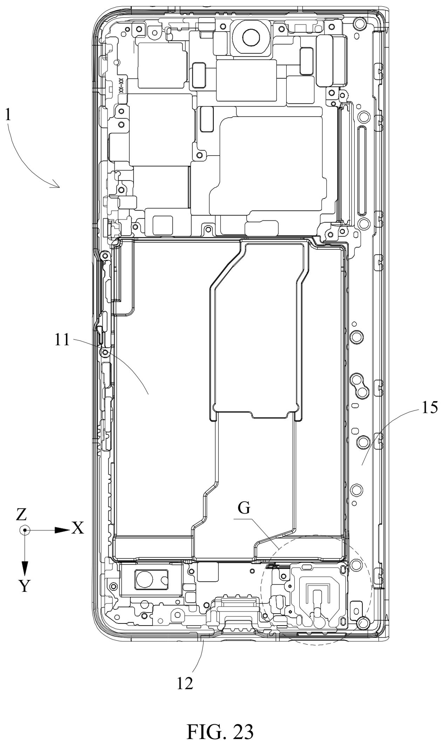

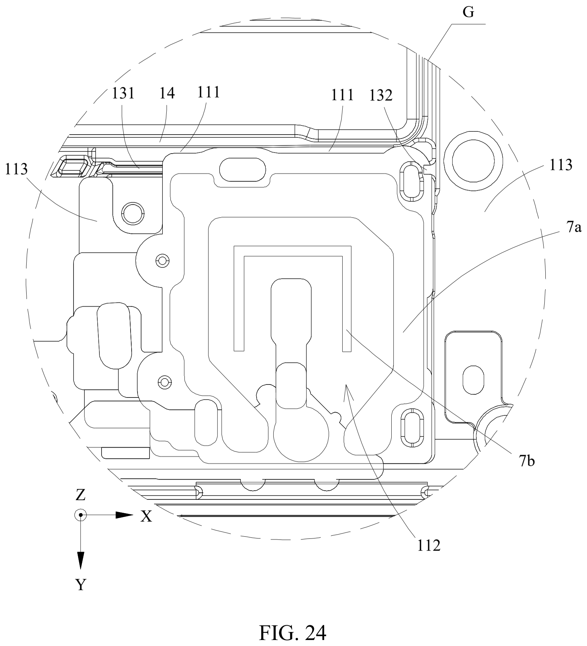

Further, refer to FIG. 23 and FIG. 24. FIG. 23 is a diagram of a structure of the middle frame 1 in FIG. 6, where a back adhesive layer and a dispensed adhesive are provided on the middle frame 1. FIG. 24 is a partially enlarged view of G in FIG. 23.

As shown in FIG. 23 and FIG. 24, the base body 241 may be fastened to the middle frame 1 through bonding by using a back adhesive 7a, to improve connecting reliability of the card holder assembly 2 and the middle frame 1.

Furthermore, as shown in FIG. 23 and FIG. 24, to further improve connecting reliability between the card holder assembly 2 and the middle frame 1, a dispensed adhesive 7b may further be arranged on a bottom surface of the base body 241 or on the middle frame 1.

This embodiment of this application does not limit a shape of the back adhesive 7a or the dispensed adhesive 7b, provided that the back adhesive 7a or the dispensed adhesive 7b can ensure connecting reliability between the card holder assembly 2 and the middle frame 1. This is not limited herein.

A person skilled in the art may understand that the schematic structure in embodiments of this application constitutes no specific limitation on the mobile terminal. In some other implementations of this application, the mobile terminal may include more components than those shown in the figures, or have some components combined, or have some components split, or have a different component arrangement.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A mobile terminal, comprising:
a middle frame (1), wherein the middle frame (1) comprises a body (11) and a frame (12), and the frame (12) is arranged around an edge of the body (11);
a card holder assembly (2), wherein the card holder assembly (2) is fastened to the body (11), and the card holder assembly (2) at least partially penetrates through the frame (12); and
a bracket (3), wherein the bracket (3) is fastened to the body (11) and comprises a bracket body (31) and a limiting portion (32) formed on the bracket body (31), and in a first direction (Z), the card holder assembly (2) is at least partially located between the limiting portion (32) and the body (11).

2. The mobile terminal according to claim 1, wherein in a second direction (Y), the bracket (3) is arranged on one side, away from the frame (12), of the card holder assembly (2); and
the limiting portion (32) extends along an edge of the bracket body (31) to the second direction (Y).

3. The mobile terminal according to claim 1, wherein in the second direction (Y), a width of the limiting portion (32) is d, and d≥0.3 mm.

4. The mobile terminal according to claim 1, wherein the middle frame (1) further comprises a mounting protrusion (13), and the mounting protrusion (13) is arranged on the body (11) in a protruding manner; and
the bracket body (31) is provided with a groove (311), and the groove (311) is engaged with the mounting protrusion (13).

5. The mobile terminal according to claim 4, wherein the bracket body (31) comprises a support portion (312), a first bending portion (313), and a second bending portion (314), and in the second direction (Y), the first bending portion (313) and the second bending portion (314) are respectively arranged at two ends of the support portion (312);
the first bending portion (313) and the second bending portion (314) are bent along an edge of the support portion (312) toward one side close to the body (11); and
the first bending portion (313), the second bending portion (314), and the support portion (312) enclose the groove (311).

6. The mobile terminal according to claim 5, wherein the second bending portion (314) is provided with a plurality of notches (315);
the card holder assembly (2) comprises an elastic switch (28) and a switch movable groove (29), and the elastic switch (28) at least partially movably penetrates through the switch movable groove (29); and
at least one of the notches (315) is arranged corresponding to the switch movable groove (29).

7. The mobile terminal according to claim 5, wherein the first bending portion (313) comprises a first bending edge (313a) and a second bending edge (313b); and
in a third direction (X), the first bending edge (313a) and the second bending edge (313b) are located on two sides of the limiting portion (32).

8. The mobile terminal according to claim 5, wherein the bracket (3) further comprises an abutting portion (33), and the abutting portion (33) is folded outward along an edge of the second bending portion (314); and
an abutting platform (111) is arranged on the body (11) in a protruding manner, and the abutting portion (33) abuts against the abutting platform (111).

9. The mobile terminal according to claim 8, wherein the abutting portion (33) is provided with an outward folded edge (331), and the abutting portion (33) abuts against the abutting platform (111) through the folded edge (331).

10. The mobile terminal according to claim 8, wherein the middle frame (1) further comprises a fence portion (14) arranged on a surface of the body (11) in a protruding manner, and the fence portion (14) is spaced apart from the mounting protrusion (13) in the second direction (Y); and
the abutting platform (111) is at least partially located between the mounting protrusion (13) and the fence portion (14).

11. The mobile terminal according to claim 5, wherein a mounting groove (112) configured to accommodate the card holder assembly (2) is formed on the body (11), and a boss (113) adjacent to the mounting groove (112) is further formed on the body (11); and
the mounting protrusion (13) comprises a first protrusion (131), and the first protrusion (131) is arranged on a surface of the boss (113) in a protruding manner.

12. The mobile terminal according to claim 11, wherein the body (11) further comprises a connecting surface (114), and the connecting surface (114) is formed on one side, adjacent to the mounting groove (112), of the boss (113);
the mounting protrusion (13) further comprises a second protrusion (132), and the second protrusion (132) is formed on the connecting surface (114); and
the second protrusion (132) extends in the third direction (X), and the second protrusion (132) at least partially extends to a position above the mounting groove (112).

13. The mobile terminal according to claim 11, wherein the mounting protrusion (13) further comprises a limiting protrusion (133), and the limiting protrusion (133) is formed at one end, away from the mounting groove (112), of the first protrusion (131); and
the limiting protrusion (133) is capable of abutting against the bracket (3).

14. The mobile terminal according to any one of claims 1 to 13, wherein the bracket (3) further comprises an avoidance slot (34), and in the second direction (Y), the avoidance slot (34) at least penetrates through one side of the limiting portion (32);
the card holder assembly (2) comprises a card holder (23), a rotatable member (25) and a positioning column (26), and the rotatable member (25) is capable of rotating around a center of the positioning column (26) to push the card holder (23) out of the middle frame (1); and
the avoidance slot (34) is arranged corresponding to the positioning column (26).

15. The mobile terminal according to any one of claims 1 to 13, wherein the mobile terminal further comprises an adhesive layer (4), and the adhesive layer (4) is at least partially arranged between the limiting portion (32) and the card holder assembly (2).

16. The mobile terminal according to any one of claims 1 to 13, wherein the mobile terminal further comprises a circuit board bracket (5) and a circuit board (6), and the circuit board (6) is fastened between the circuit board bracket (5) and the body (11);
the card holder assembly (2) further comprises a card base (24), and the card base (24) comprises a base body (241) and a connector (242) connected to the base body (241); and
the base body (241) is fastened to the body (11) through bonding, and the connector (242) is at least partially located between the circuit board (6) and the circuit board bracket (5).
